(19) Europäisches Patentamt
European Patent Office
Office européen des brevets

(11) **EP 1 995 202 B1**

(12) **EUROPEAN PATENT SPECIFICATION**

(45) Date of publication and mention
of the grant of the patent:
**22.04.2020 Bulletin 2020/17**

(21) Application number: **06729025.4**

(22) Date of filing: **14.03.2006**

(51) Int Cl.:
**B66B 1/32** *(2006.01)*          **B66D 5/30** *(2006.01)*
**F16D 65/14** *(2006.01)*        **H02P 3/04** *(2006.01)*
**F16D 121/22** *(2012.01)*

(86) International application number:
**PCT/JP2006/304972**

(87) International publication number:
**WO 2007/105302 (20.09.2007 Gazette 2007/38)**

(54) **ELECTROMAGNETIC BRAKE CONTROL DEVICE**

ELEKTROMAGNETISCHE BREMSSTEUERVORRICHTUNG

DISPOSITIF DE COMMANDE DE FREIN ELECTROMAGNETIQUE

(84) Designated Contracting States:
**DE**

(43) Date of publication of application:
**26.11.2008 Bulletin 2008/48**

(73) Proprietor: **MITSUBISHI ELECTRIC
CORPORATION
Chiyoda-ku
Tokyo 100-8310 (JP)**

(72) Inventors:
• **KIGAWA, Hiroshi
Chiyoda-ku, Tokyo 1008310 (JP)**

• **UEDA, Takaharu
Chiyoda-ku, Tokyo 1008310 (JP)**
• **OKADA, Daisuke
c/o Mitsubishi Electric Corporation
Chiyoda-ku Tokyo 100-8310 (JP)**

(74) Representative: **Hoffmann Eitle
Patent- und Rechtsanwälte PartmbB
Arabellastraße 30
81925 München (DE)**

(56) References cited:
EP-A1- 1 544 148          DE-A1- 3 942 836
JP-A- 10 161 747          JP-B2- 3 307 002
JP-B2- 3 307 002          US-B1- 6 845 001

EP 1 995 202 B1

**Description**

Technical Field

The present invention relates to an electromagnetic brake device including an electromagnetic brake control device for controlling an excitation state of a brake coil in an electromagnetic brake device such as a brake device for an elevator.

Background Art

In a conventional electromagnetic brake device, exciting current command means for gradually increasing an exciting current command for a brake coil until a value thereof reaches a preset value is used to abate a collision noise generated upon a collision of an armature with an electromagnet field in releasing a brake
(e.g., see JP 09-267982 A).
Another document is JP 3 307 002 B, which refers to the control of a brake mechanism of an elevator.
A further document is DE 39 42 836 A1 referring to a method for detecting the motion and position state of a component of an inductive electric load. The component can be moved between two end portions by magnetic interaction, in which the total wave form of the drive current is divided into a plurality of states. By evaluating these individual states, comprehensive error diagnostics and a setting of operating parameter of the inductive electric load to operating conditions are possible.

Disclosure of the Invention

Problems to be solved by the Invention

However, in the conventional electromagnetic brake device as described above, an exciting current flowing through the brake coil simply gradually increases, so a considerably long time is required for an operation of releasing the brake when an electromagnet with a large time constant is used. In addition, a dispersion of a gap between the electromagnet and the armature, a dispersion of a spring force of a braking spring, a dispersion of a characteristic of the electromagnet, secular variations in those values, and the like are not taken into account, so an effect of abating the collision noise cannot be achieved stably.
The present invention has been made to solve the above-mentioned problems, and it is therefore an object of the present invention to obtain an electromagnetic brake device including an electromagnetic brake control device capable of stably abating a collision noise caused in releasing a brake while restraining a time required for an operation of releasing the brake from being prolonged.

Means for solving the Problems

The present invention provides an electromagnetic brake device including an electromagnetic control device comprising the features of claim 1 or claim 8.

Brief Description of the Drawings

Fig. 1 is a schematic diagram roughly showing an elevator apparatus according to Embodiment 1 of the present invention.
Fig. 2 is a block diagram showing the configuration of a control device body of Fig. 1.
Fig. 3 is a flowchart showing an operation of the control device body of Fig. 1 in releasing a brake.
Fig. 4 includes a graph showing changes in a current command for the control device body of Fig. 1 and a graph showing changes in a current flowing through a brake coil.
Fig. 5 includes a graph showing movements of an armature of Fig. 1 in releasing the brake and a graph showing changes in a voltage command in releasing the brake.
Fig. 6 is a block diagram showing a control device body of an elevator apparatus according to Embodiment 2 of the present invention.
Fig. 7 is a flowchart showing an operation of the control device body of Fig. 6 in releasing a brake.
Fig. 8 is a graph showing a relationship between an operation start time and a control command value in a gap/pressing force compensation portion of Fig. 6.

2

Fig. 9 is a block diagram showing a control device body of an elevator apparatus according to Embodiment 3 of the present invention.

Fig. 10 is a flowchart showing an operation of the control device body of Fig. 9 in releasing a brake.

Fig. 11 is a block diagram showing a control device body of an elevator apparatus according to Embodiment 4 of the present invention.

Fig. 12 is a flowchart showing an operation of the control device body of Fig. 11 in releasing a brake.

Fig. 13 is a block diagram showing a control device body of an elevator apparatus according to Embodiment 5 of the present invention.

Fig. 14 is a flowchart showing an operation of the control device body of Fig. 13 in releasing a brake.

Best Modes for carrying out the Invention

Preferred embodiments of the present invention will be described hereinafter with reference to the drawings.

Embodiment 1

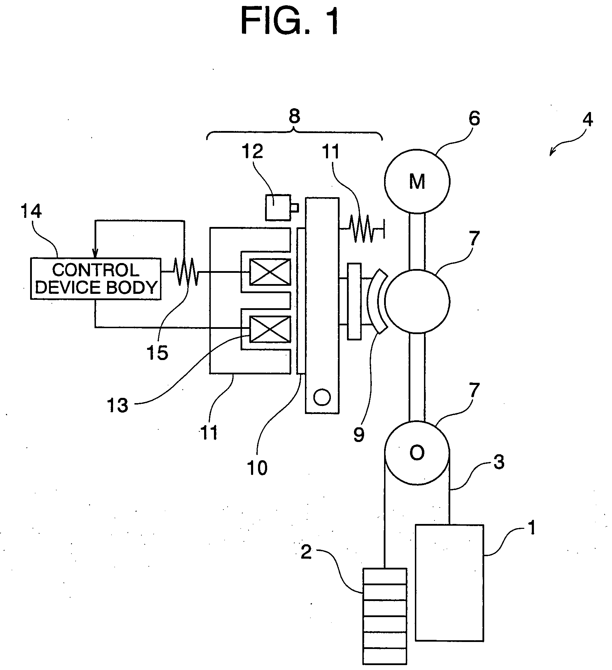

Fig. 1 is a schematic diagram roughly showing an elevator apparatus according to Embodiment 1 of the present invention. Referring to Fig. 1, a car 1 and a counterweight 2, which are suspended within a hoistway by means of a main rope 3, are raised/lowered within the hoistway owing to a driving force of a hoisting machine 4.

The hoisting machine 4 has a drive sheave 5 around which the main rope 3 is looped, a motor 6 for rotating the drive sheave 5, a brake drum 7 as a brake rotational body for being rotated integrally with the drive sheave 5 as the car 1 travels, and an electromagnetic brake device 8 for braking rotation of the drive sheave 5.

The electromagnetic brake device 8 has a brake shoe 9 for being moved into contact with and away from the brake drum 7, an armature 10 connected to the brake shoe 9, a braking spring 11 for pressing the brake shoe 9 against the brake drum 7, an electromagnet 11 disposed facing the armature 10 to generate an electromagnetic suction force for opening the brake shoe 9 away from the brake drum 7 against the braking spring 11, and a release detecting switch 12 for detecting that the armature 10 has been displaced to a full release position. The electromagnet 11 is provided with a brake coil 13.

An excitation state of the brake coil 13 is controlled by a control device body 14. A detection signal from a current detector 15 for detecting a value of a current conducted through the brake coil 13 is input to the control device body 14.

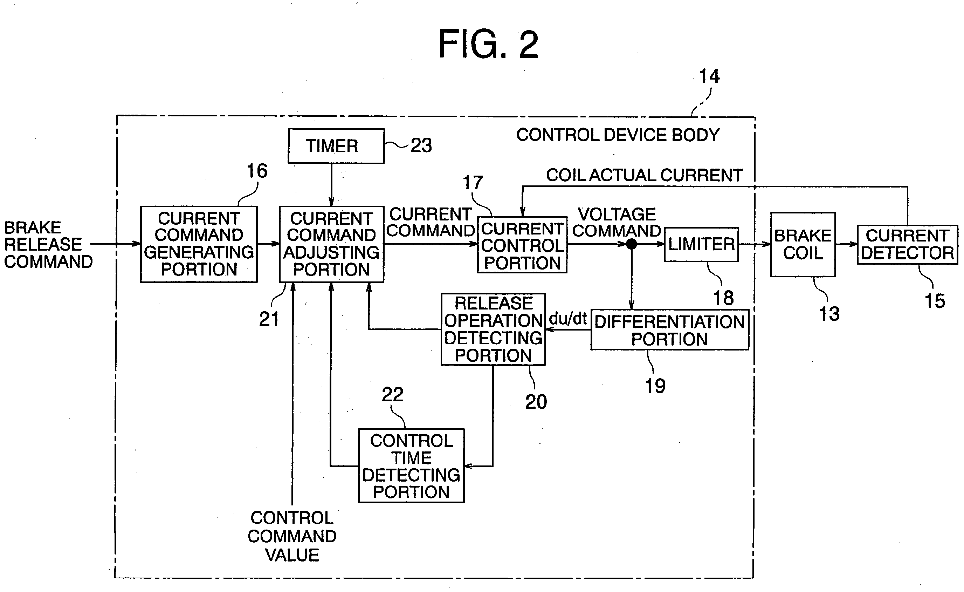

Fig. 2 is a block diagram showing the configuration of the control device body 14 of Fig. 1. Referring to Fig. 2, a current command generating portion 16 generates a current command for causing a current to flow through the brake coil 13 in accordance with a brake release command. The current command from the current command generating portion 16 and the detection signal from the current detector 15 are input to a current control portion 17. The current control portion 17 generates a voltage command as a command regarding a value of a voltage applied to the brake coil 13 such that an actual current value of the brake coil 13 coincides with a value of the current command.

The voltage command from the current control portion 17 is input to the brake coil 13 via a limiter 18. A value of the voltage command from the current control portion 17 is differentiated by a differentiation portion 19 and then input to a release operation detecting portion 20. The release operation detecting portion 20 compares an output from the differentiation portion 19 with a preset threshold, thereby detecting the start of a release operation (displacement) of the armature 10. That is, the release operation detecting portion 20 detects the release operation of the armature 10 based on a change in the value of the voltage command with time.

When the release operation of the armature 10 is detected, information indicating detection thereof is input from the release operation detecting portion 20 to a current command adjusting portion 21 and a control time detecting portion 22. Based on the information from the release operation detecting portion 20, the current command adjusting portion 21 changes the value of the current command and transmits the changed value to the current control portion 17. More specifically, when the start of the release operation is detected, the current command adjusting portion 21 reduces a suction force generated in the brake coil 13 to a value smaller than a suction force before the start of the release operation.

The control time detecting portion 22 counts a time (control time) from the start of the release operation of the armature 10. A timer 23 counts a time from the start of excitation of the brake coil 13 in accordance with a brake release command.

When a preset time Tend elapses from the start of excitation of the brake coil 13, the control device body 14 stops adjusting the current command in the current command adjusting portion 21, and causes the brake coil 13 to generate the not-yet-reduced suction force. When a preset time Tcend elapses from the start of the release operation of the armature 10, the control device body 14 stops adjusting the current command in the current command adjusting portion 21, and causes the brake coil 13 to generate the not-yet-reduced suction force.

The control device body 14 is provided in an elevator control device for controlling the operation of the car 1.

The elevator control device has a control panel (not shown) having a calculation processing unit (CPU), a storage portion (ROM, RAM, hard disk, and the like), and signal input/output portions. The function of the control device body 14 is realized by the control panel. Thus, programs for realizing the aforementioned function are stored in the storage portion of the control panel.

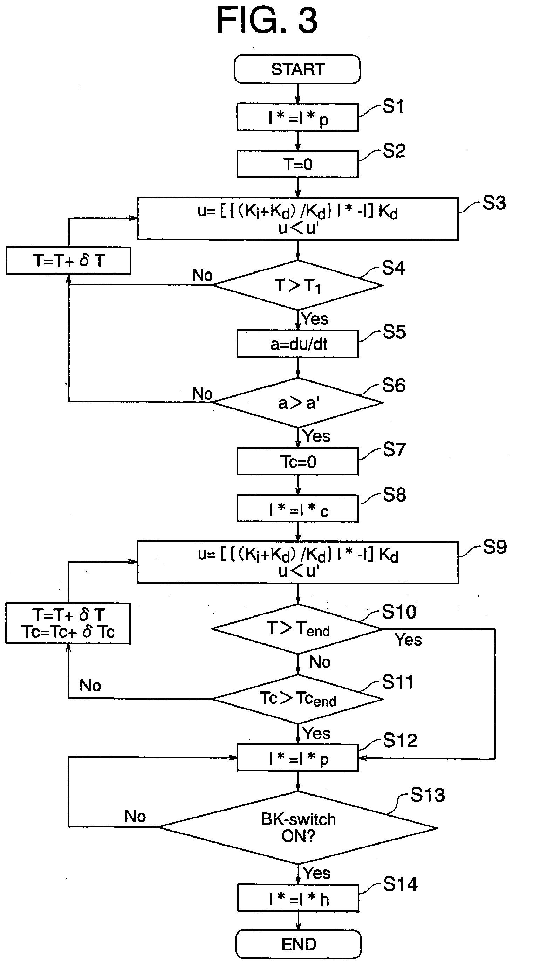

Next, an operation will be described. Fig. 3 is a flowchart showing the operation of the control device body 14 of Fig. 1 in releasing the brake. When a door of the car 1 is closed to finish preparations for the start of the raising/lowering thereof, a brake release command is input to the control device body 14. Thus, an initial current command value I*p is output from the current- command generating portion 16 as a value I* of the current command (Step S1). At the same time, the timer 23 is reset, so the counting of a time T from the start of excitation is started (Step S2).

Subsequently, the current control portion 17 generates a voltage command u such that an actual current value I of the brake coil 13 coincides with the value I* of the current command (Step S3). In this case, given that Kd and Ki denote a differential gain and a proportional gain, respectively, the voltage command is obtained from, for example, the following expression.

$$u = [\{(Ki + Kd)/Kd\}I^* - I]Kd \quad \ldots \quad (1)$$

It should be noted, however, that the voltage command input to the brake coil 13 is limited to a range below an upper limit u' by the limiter 18 for the sake of circuit protection (u < u').

When the voltage command is input to the brake coil 13, a coil actual current I increases with a certain time constant, so the voltage command u gradually decreases according to the expression (1) .

When the time T from the start of excitation exceeds a preset time T1 (Step S4), the differentiation portion 19 starts outputting a differential value to the release operation detecting portion 20 (Step S5). The time T1 to the start of the outputting of the differential value is set shorter than a time Tp from the start of excitation to the normal start of the release operation of the armature 10.

After that, when the coil actual current increases and the suction force generated in the brake coil 13 overcomes the spring force of the braking spring 11, the release operation of the armature 10 is started. At this moment, an induced electromotive force is generated in such a direction as to hinder flux changes (in this case, direction in which the current value decreases), but the current control portion 17 increases the value of the voltage command in such a manner as to supplement a decrease in current. Accordingly, the differential value output from the differentiation portion 19 changes from a negative value to a positive value when the release operation of the armature 10 is started.

The release operation detecting portion 20 compares a differential value a calculated by the differentiation portion 19 with a preset threshold a' (> 0) (Step S6). When the differential value a exceeds the threshold a', a signal indicating detection of the start of the release operation is output from the release operation detecting portion 20. Thus, the control time detecting portion 22 is reset, so the counting of a time Tc from the start of the release operation of the armature 10 is started (Step S7). The current command adjusting portion 21 changes over the value I* of the current command input to the current control portion 17 from the initial current command value I*p to a control command value I*c (I*c < I*p) (Step S8).

When the value I* of the current command is changed over to the control command value I*c, the current control portion 17 corrects the voltage command u (Step S9). The control command value I*c is set to a minimum required value for the release operation of the armature 10. That is, after the release operation of the armature 10 is started, the current value is reduced to a minimum required value to abate an impact force and a collision noise caused upon a collision of the armature 10 with the electromagnet 11. On the other hand, until the armature 10 starts the release operation, a current corresponding to the performance limits of a power supply and the brake coil 13 is caused to flow to minimize the time to the start of the release operation.

After the voltage command is corrected in accordance with a reduction in the current command value, it is monitored whether or not the time T from the start of excitation has reached Tend (Step S10) and whether or not the time Tc from the start of the release operation has reached Tcend (Step S11). When one of the conditions: T > Tend and Tc > Tcend is fulfilled, the value I* of the current command is returned to the initial current command value I*p regardless of the state of the release operation (Step S12).

After that, it is monitored whether or not the release detecting switch 12 is turned ON (Step S13). When the release detecting switch 12 is turned ON, it is determined that the armature 10 has been displaced to a release position to complete the release operation. As a result, the value of the current command is changed over to a holding current command value I*h (Step S14).

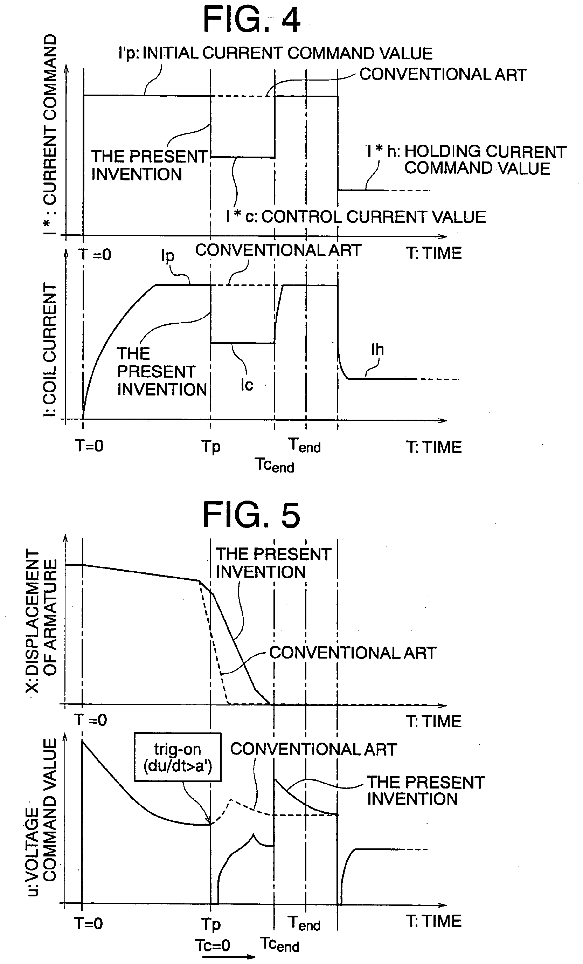

Fig. 4 includes a graph showing changes in the current command of the control device body 14 of Fig. 1 and a graph showing changes in the current flowing through the brake coil 13. Fig. 5 includes a graph showing the movements of the armature 10 of Fig. 1 in releasing the brake and a graph showing changes in the voltage command in releasing the brake. As shown in Figs. 4 and 5, when the actual release operation of the armature 10 is started and the differential value of the voltage command exceeds the threshold a', the value of the current command is changed over to the control current value I*c, and the value of the current flowing through the brake coil 13 is also reduced to Ic.

In the electromagnetic brake control device configured as described above, the start of the release operation of the armature 10 resulting from suction by the brake coil 13 can be detected. When the start of the release operation is detected, the suction force generated in the brake coil 13 is reduced to the value smaller than the suction force before the start of the release operation. It is therefore possible to stably abate a collision noise caused in releasing a brake as to any kind of electromagnetic brake device while restraining the time required for the operation of releasing the brake from being prolonged.

The control device body 14 has the current command generating portion 16 for generating the current command in accordance with the brake release command, the current control portion 17 for generating the voltage command such that the actual current value of the brake coil 13 coincides with the value of the current command, and the release operation detecting portion 20 for detecting the release operation of the armature 10 based on the change in the value of the voltage command. Therefore, the start of the release operation of the armature 10 can be detectedmore reliably. Detection of the release operation of the armature 10 may also be carried out by a sensor capable of continuously detecting the operation (displacement) of the armature 10.

Further, when the preset time Tend elapses from the start of excitation of the brake coil 13, the control device body 14 causes the brake coil 13 to generate the not-yet-reduced suction force. Therefore, even if an abnormality occurs in the control for reducing the suction force, the release operation can be performed more reliably. As a result, an improvement in reliability can be achieved.

Still further, when the preset time Tcend elapses from the start of the release operation of the armature 10, the control device body 14 causes the brake coil 13 to generate the not-yet-reduced suction force. Therefore, the release operation can be performed thereby more reliably as well. As a result, an improvement in reliability can be achieved.

Embodiment 2

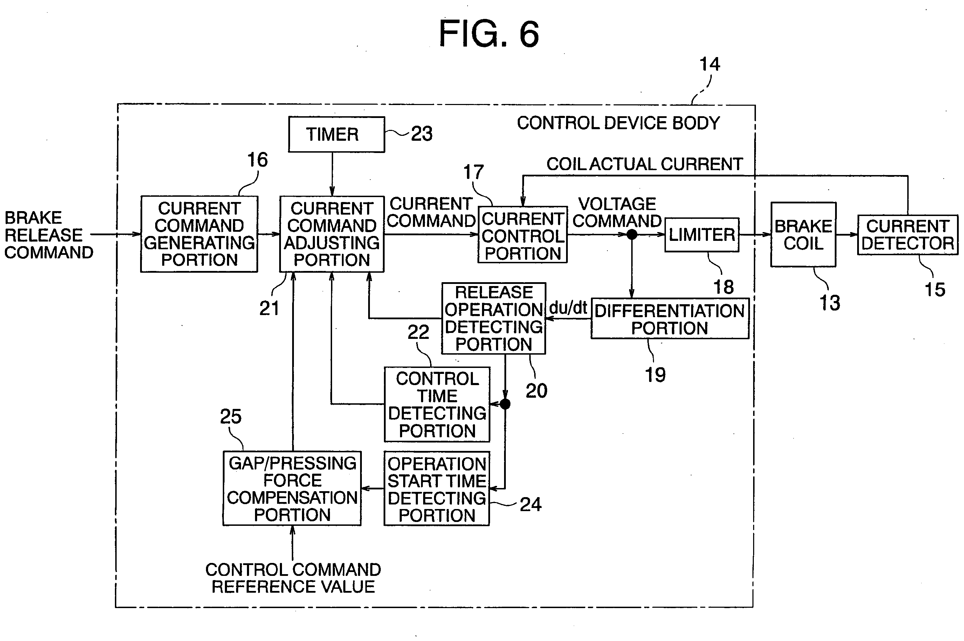

Reference will be made next to Fig. 6. Fig. 6 is a block diagram showing a control device body of an elevator apparatus according to Embodiment 2 of the present invention. In addition to the configuration of Embodiment 1 of the present invention, the control device body 14 has an operation start time detecting portion 24 and a gap/pressing force compensation portion 25. The operation start time detecting portion 24 detects an operation start time Tp as a time from the start of excitation of the brake coil 13 to the start of the release operation of the armature 10, and transmits a result of the detection to the gap/pressing force compensation portion 25.

The gap/pressing force compensation portion 25 changes a control command value based on the operation start time Tp calculated by the operation start time detecting portion 24. More specifically, the gap/pressing force compensation portion 25 calculates a control current value such that a current value of the brake coil 13 becomes equal to a minimum required value for operating the armature 10 even when a gap between the electromagnet 11 and the armature 10 or a pressing force of the braking spring 11 changes.

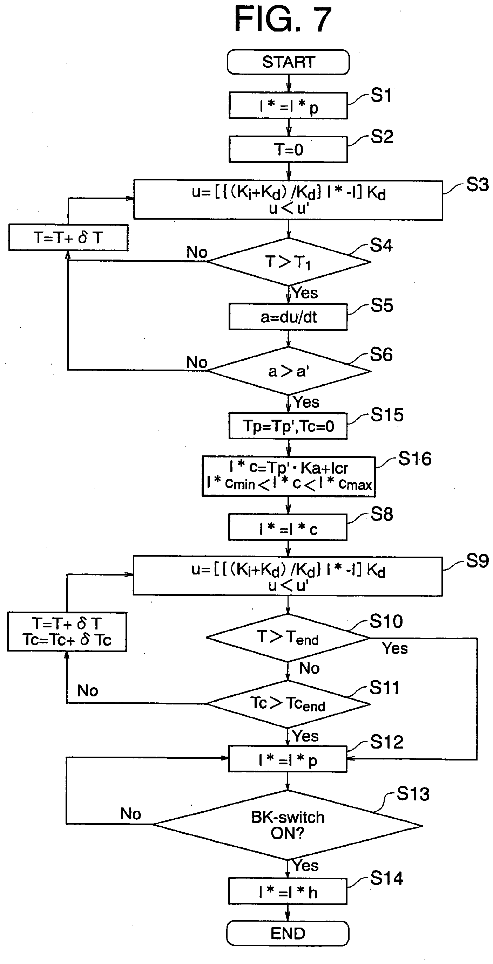

Fig. 7 is a flowchart showing the operation of the control device body 14 of Fig. 6 in releasing the brake. When a signal indicating detection of the start of the release operation of the armature 10 is output from the release operation detecting portion 20, a measurement result Tp' of the operation start time Tp is transmitted to the gap/pressing force compensation portion 25, and the counting of the time Tc from the start of the release operation of the armature 10 is started (Step S15).

A preset control command reference value Icr (Icr < Ip) has been input to the gap/pressing force compensation portion 25. When the operation start time Tp' is input to the gap/pressing force compensation portion 25, the gap/pressing force compensation portion 25 calculates the control command value I*c as follows, using a correction coefficient Ka (Step S16).

$$I^{*}c = Tp' \cdot Ka + Icr \ \dots \ (2)$$

where: I*cmin < I*c < I*cmax
I*cmin: lower limit of control command value
I*cmax: upper limit of control command value

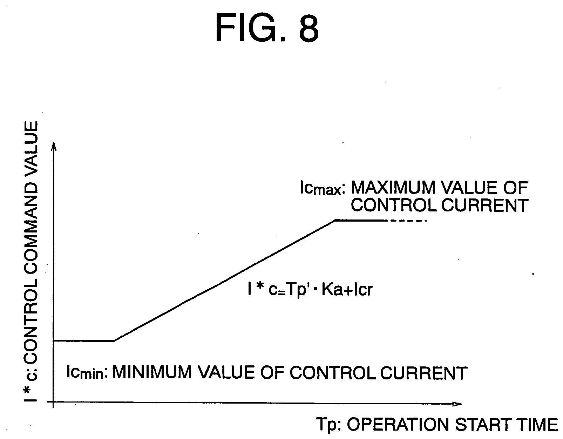

Fig. 8 is a graph showing a relationship between an operation start time and a control command value in the gap/pressing force compensation portion 25 of Fig. 6. Embodiment 2 of the present invention is identical to Embodiment 1 of the present invention in other configurational details and other operational details.

In the electromagnetic brake control device configured as described above, the control command value is changed based on the time from the start of excitation to the start of the release operation. Therefore, the current value of the brake coil 13 after the start of the release operation can be adjusted to the minimum required value regardless of a difference in the gap or the pressing force.

Embodiment 3

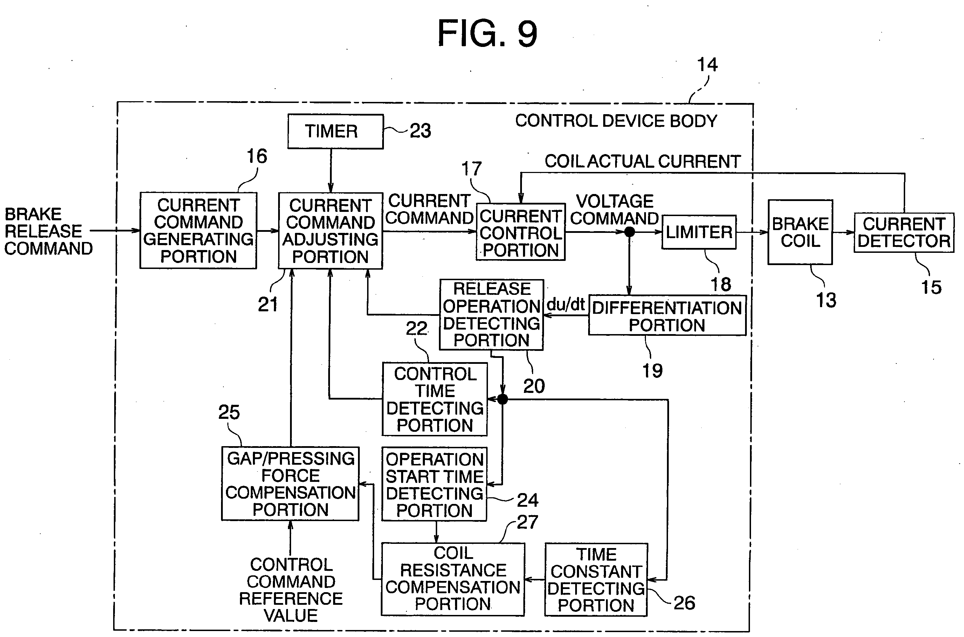

Reference will be made next to Fig. 9. Fig. 9 is a block diagram showing a control device body of an elevator apparatus according to Embodiment 3 of the present invention. In addition to the configuration of Embodiment 2 of the present invention, the control device body 14 has a time constant detecting portion 26 and a coil resistance compensation portion 27. The time constant detecting portion 26 detects a time Tr from the start of excitation of the brake coil 13 to the attainment of a preset value $I_1$ by the actual current value I of the brake coil 13, and transmits a result of the detection to the coil resistance compensation portion 27. The set value $I_1$ is set smaller than a current value at the start of the release operation of the armature 10.

The coil resistance compensation portion 27 corrects the measurement result Tp in the operation start time detecting portion 24 based on information from the time constant detecting portion 26, and transmits the corrected measurement result Tp to the gap/pressing force compensation portion 25. More specifically, the coil resistance compensation portion 27 corrects the operation start time Tp in such a manner as to compensate for a change in time constant resulting from a change in the temperature of the brake coil 13 in the time Tp for starting the release operation of the armature 10.

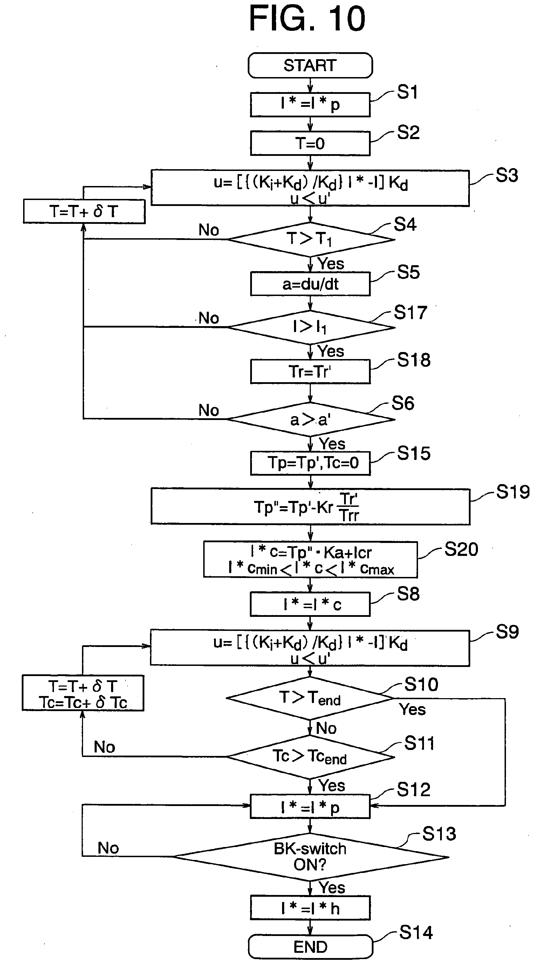

Fig. 10 is a flowchart showing the operation of the control device body 14 of Fig. 9 in releasing the brake. Before the release operation of the armature 10 is started, the time constant detecting portion 26 monitors whether or not the current value of the brake coil 13 has exceeded the set value $I_1$ (Step S17), and measures the time Tr to the attainment of the set value $I_1$ (Step S18). A measurement result Tr' of the time Tr is transmitted to the coil resistance compensation portion 27.

When the signal indicating detection of the start of the release operation of the armature 10 is output from the release operation detecting portion 20, the measurement result Tp' of the operation start time Tp is transmitted to the coil resistance compensation portion 27, and the counting of the time Tc from the start of the release operation of the armature 10 is started (Step S15).

When the time Tr' and the operation start time Tp' are input to the coil resistance compensation portion 27, the coil resistance compensation portion 27 calculates a correction value Tp" for the operation start time Tp as follows, using a correction coefficient Kr and a preset reference value Trr (Step S19).

$$\mathrm{Tp"\ =\ Tp'\ -\ Kr \cdot Tr'/Trr\ \ldots\ (3)}$$

When the operation start time Tp" is input to the gap/pressing force compensation portion 25, the gap/pressing force compensation portion 25 calculates the control command value I*c as follows, using the correction coefficient Ka (Step S20).

$$\mathrm{I^{*}c\ =\ Tp" \cdot Ka\ +\ Icr\ \ldots\ (4)}$$

where: I*cmin < I*c < I*cmax

Embodiment 3 of the present invention is identical to Embodiment 1 of the present invention in other configurational details and other operational details.

In the electromagnetic brake control device configured as described above, the change in the operation start time Tp resulting from the change in the resistance of the brake coil 13 is compensated for. Therefore, the current value of the brake coil 13 after the start of the release operation can be adjusted to the minimum required value regardless of the change in the temperature of the brake coil 13.

Embodiment 4

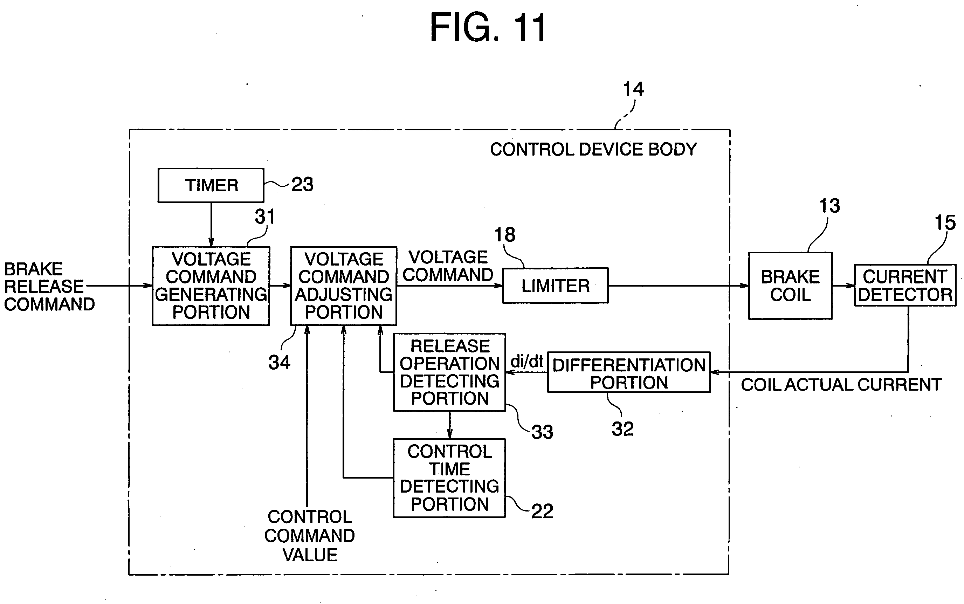

Reference will be made next to Fig. 11. Fig. 11 is a block diagram showing a control device body of an elevator apparatus according to Embodiment 4 of the present invention. Although the current command is generated to control the suction force of the brake coil 13 in Embodiments 1 to 3 of the present invention, a voltage command is generated to control the suction force of the brake coil 13 in Embodiment 4 of the present invention.

Referring to Fig. 11, a voltage command generating portion 31 generates a voltage command for applying a voltage to the brake coil 13 in accordance with a brake release command. The voltage command is input to the brake coil 13 via a voltage command adjusting portion 34 and the limiter 18. A coil actual current value detected by the current detector 15 is differentiated by a differentiation portion 32 and input to a release operation detecting portion 33. The release operation detecting portion 33 compares an output of the differentiation portion 32 with a preset threshold to detect the start of the release operation of the armature 10. That is, the release operation detecting portion 33 detects the release operation of the armature 10 based on a change in the coil actual current value with time.

When the release operation of the armature 10 is detected, information indicating detection thereof is input from the release operation detecting portion 33 to the voltage command adjusting portion 34 and the control time detecting portion 22. The voltage command adjusting portion 34 changes the value of the voltage command based on the information from the release operation detecting portion 33, and transmits the changed value to the limiter 18. More specifically, when the start of the release operation is detected, the voltage command adjusting portion 34 reduces a suction force generated in the brake coil 13 to a value smaller than a suction force before the start of the release operation.

The control time detecting portion 22 counts a time from the start of the release operation of the armature 10 (control time). The timer 23 counts a time from the start of excitation of the brake coil 13 in accordance with a brake release command.

When the preset time Tend elapses from the start of excitation of the brake coil 13, the control device body 14 stops adjusting a voltage command in the voltage command adjusting portion 34, and causes the brake coil 13 to generate the not-yet-reduced suction force. When the preset time Tcend elapses from the start of the release operation of the armature 10, the control device body 14 stops adjusting the voltage command in the voltage command adjusting portion 34, and causes the brake coil 13 to generate the not-yet-reduced suction force.

Embodiment 4 of the present invention is identical to Embodiment 1 of the present invention (Fig. 1) as to the construction of the entire elevator apparatus.

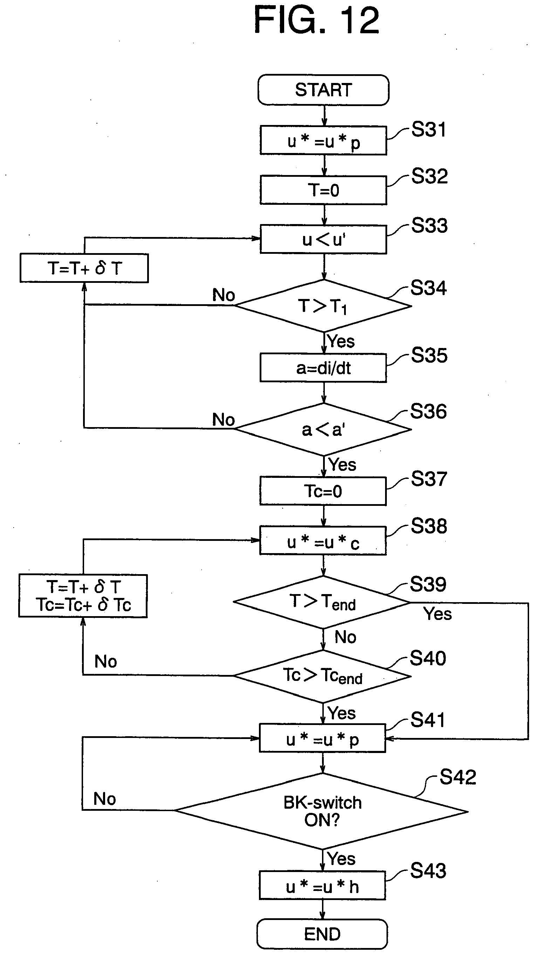

Next, an operation will be described. Fig. 12 is a flowchart showing the operation of the control device body 14 of Fig. 11 in releasing the brake. When the door of the car 1 is closed to finish preparations for the start of the raising/lowering thereof, a brake release command is input to the control device body 14. Thus, an initial voltage command value $u^*p$ is output from the voltage command generating portion 31 as a value $u^*$ of the voltage command (Step S31). At the same time, the timer 23 is reset, so the counting of the time T from the start of excitation is started (Step S32).

The voltage command input to the brake coil 13 is limited to a range below the upper limit $u'$ in the limiter 18 for the sake of circuit protection ($u < u'$) (Step S33). When the time T from the start of excitation exceeds the preset time T1 (Step S34), the outputting of a differential value from the differentiation portion 32 to the release operation detecting portion 33 is started (Step S35). The time T1 to the start of the outputting of the differential value is set shorter than the time Tp from the start of excitation to the normal start of the release operation of the armature 10.

After that, when the coil actual current increases and the suction force generated in the brake coil 13 overcomes the spring force of the braking spring 11, the release operation of the armature 10 is started. At this moment, an induced electromotive force is generated in such a direction as to hinder flux changes (in this case, direction in which the current value decreases). Accordingly, the differential value output from the differentiation portion 32 changes from a positive value to a negative value when the release operation of the armature 10 is started.

The release operation detecting portion 33 compares the differential value a calculated by the differentiation portion 32 with the preset threshold $a'$ ($<0$) (Step S36). When the differential value a becomes smaller than the threshold $a'$, a signal indicating detection of the start of the release operation is output from the release operation detecting portion 33. Thus, the control time detecting portion 22 is reset, so the counting of the time Tc from the start of the release operation of the armature 10 is started (Step S37). The voltage command adjusting portion 34 changes over the value $u^*$ of the voltage command input to the limiter 18 from the initial voltage command value $u^*p$ to a control command value $u^*c$ ($u^*c < u^*p$) (Step S38).

That is, after the start of the release operation of the armature 10, the voltage is reduced to a minimum required value to abate an impact force and a collision noise caused upon a collision of the armature 10 with the electromagnet 11. On the other hand, until the armature 10 starts the release operation, a voltage corresponding to the performance limits of the power supply and the brake coil 13 is applied to minimize the time to the start of the release operation.

After the voltage command value is changed over to the control command value $u^*c$, it is monitored whether or not the time T from the start of excitation has reached Tend (Step S39) and whether or not the time Tc from the start of the release operation has reached Tcend (Step S40). When one of the conditions: T > Tend and Tc > Tcend is fulfilled, the value $u^*$ of the voltage command is returned to the initial voltage command value $u^*p$ regardless of the state of the release operation (Step S41).

After that, it is monitored whether or not the release detecting switch 12 is turned ON (Step S42). When the release detecting switch 12 is turned ON, it is determined that the armature 10 has been displaced to the release position to complete the release operation. As a result, the value of the voltage command is changed over to a holding voltage command value $u^*h$ (Step S42).

In the electromagnetic brake control device configured as described above, the start of the release operation of the armature 10 resulting from suction by the brake coil 13 can be detected. When the start of the release operation is detected, the suction force generated in the brake coil 13 is reduced to the value smaller than the suction force before the start of the release operation. It is therefore possible to stably abate a collision noise caused in releasing a brake as to any kind of electromagnetic brake device while restraining the time required for the operation of releasing the brake from being prolonged.

The control device body 14 has the voltage command generating portion 31 for generating the voltage command in accordance with the brake release command, and the release operation detecting portion 33 for detecting the release operation of the armature 10 based on the change in the actual current value of the brake coil 13. Therefore, the start of the release operation of the armature 10 can be detected more reliably through voltage control as well.

Embodiment 5

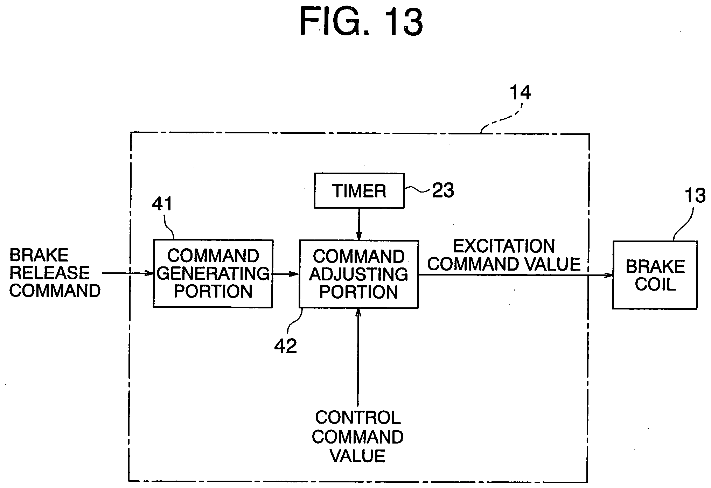

Reference will be made next to Fig. 13. Fig. 13 is a block diagram showing a control device body of an elevator apparatus according to Embodiment 5 of the present invention. Referring to Fig. 13, a command generating portion 41 generates an excitation command (current command or voltage command) for causing the brake coil 13 to generate an electromagnetic suction force in accordance with a brake release command. The excitation command is input to the brake coil 13 via a command adjusting portion 42.

The timer 23 counts a time from the start of excitation of the brake coil 13 in accordance with the brake release command. When the predetermined time T1 elapses from the start of excitation of the brake coil 13, the command adjusting portion 42 changes over a value of the excitation command input to the brake coil 13 to a value different from that of the excitation command from the command generating portion 41.

More specifically, when the time T1 elapses, the command adjusting portion 42 changes over the value of the excitation command in such a manner as to reduce the suction force generated in the brake coil 13. The time T1 is set shorter than a time from the start of excitation of the brake coil 13 to a collision of the armature 10 with the electromagnet 11.

When the preset time Tend elapses from the start of excitation of the brake coil 13, the control device body 14 stops adjusting the excitation command in the command adjusting portion 42, and causes the brake coil 13 to generate the not-yet-reduced suction force.

Embodiment 5 of the present invention is identical to Embodiment 1 of the present invention (Fig. 1) as to the construction of the entire elevator apparatus.

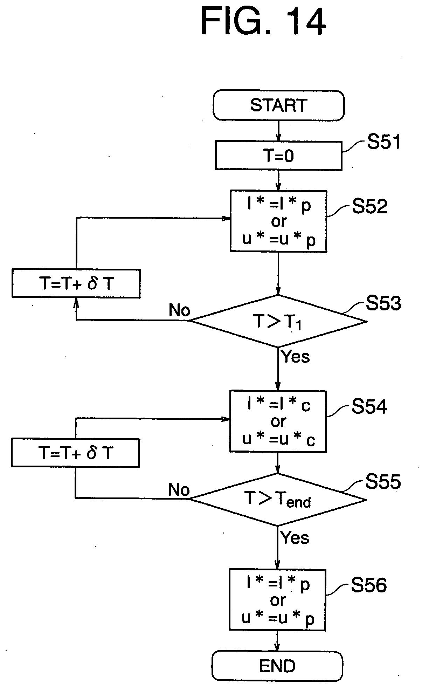

Next, an operation will be described. Fig. 14 is a flowchart showing the operation of the control device body 14 of Fig. 13 in releasing the brake. When the door of the car 1 is closed to finish preparations for the start of the raising/lowering thereof, a brake release command is input to the control device body 14. Thus, the timer 23 is reset, so the counting of the time T from the start of excitation is started (Step S51). Also, the initial current command value I*p or the initial voltage command value u*p is output from the command generating portion 41 as a value of an initial excitation command (Step S52).

When the initial excitation command is generated, it is monitored whether or not the time from the start of excitation has reached T1 (Step S53). When the time from the start of excitation does not reach T1, the excitation command value remains the initial excitation command value. When the time from the start of excitation reaches T1, the command adjusting portion 42 changes over the value of the excitation command input to the brake coil 13 from the initial excitation command value to a control command value (Step S54). The control command value is either the control current command value I*c (I*c < I*p) or the control voltage command value u*c (u*c < u*p).

That is, after the predetermined time T1 elapses from the start of excitation of the brake coil 13, a suction force is reduced to abate an impact force and a collision noise caused upon a collision of the armature 10 with the electromagnet 11. On the other hand, immediately after the start of excitation of the armature 10, a suction force corresponding to the performance limits of the power supply and the brake coil 13 is generated to shorten the time to the start of the release operation.

After the excitation command value is changed over to the control command value, it is monitored whether or not the time T from the start of excitation has reached Tend (Step S55). When the time T from the start of excitation reaches Tend, the value of the excitation command is returned to the initial excitation command value I*p or u*p regardless of the state of the release operation (Step S56).

After that, when the release detecting switch 12 is turned ON, it is determined that the armature 10 has been displaced to the release position to complete the release operation. As a result, the value of the excitation command is changed over to a holding excitation command value.

In the electromagnetic brake control device configured as described above, when the time Tend elapses from the start of excitation of the brake coil 13, the suction force of the brake coil 13 increases. Therefore, the release operation can be performed more reliably, so an improvement in reliability can be achieved.

The brake coil 13 is caused to generate the initial suction force immediately after the start of excitation thereof.

After that, when the time T1 elapses, the suction force of the brake coil 13 is reduced. When the time Tend elapses from the start of excitation of the brake coil 13, the suction force of the brake coil 13 is returned to the initial suction force. It is therefore possible to stably abate a collision noise caused in releasing the brake while restraining the time required for the operation of releasing the brake from being prolonged. Moreover, an improvement in reliability can be achieved.

In Embodiment 5 of the present invention, when the time T1 elapses from the start of excitation, the suction force of the brake coil 13 is reduced. However, the condition for changing over the suction force is not limited to the time from the start of excitation. For example, the condition for changing over the suction force may also be the operation of the armature 10, the position of the armature 10, the voltage value of the brake coil 13, the current value of the brake coil 13, or the like.

In Embodiment 5 of the present invention, when the time Tend elapses from the start of excitation, the suction force of the brake coil 13 is returned to the initial suction force. However, the suction force of the brake coil 13 is not absolutely required to be returned to the initial suction force, but may be changed to a suction force larger than the initial suction force or a suction force slightly smaller than the initial suction force.

Further, in Embodiment 5 of the present invention, when the time T1 elapses from the start of excitation, the suction force of the brake coil 13 is reduced. However, it is also appropriate to cause the brake coil 13 to generate a minimum required suction force for sucking the armature 10 immediately after the start of excitation, and change over the suction force of the brake coil 13 to a maximum suction force when the time Tend elapses.

Still further, although the electromagnetic brake control device for the elevator apparatus has been described in Embodiments 1 to 5 of the present invention, the present invention is also applicable to electromagnetic brake control devices provided in other components.

In Fig. 1, the electromagnetic brake device designed such that the brake shoe 9 is pressed against an outer peripheral surface of the brake drum 7 is illustrated. However, the electromagnetic brake device may also be designed such that the brake shoe 9 is pressed against an inner peripheral surface of the brake drum 7.

Further, the brake rotational body may also be a brake disc. In other words, the present invention is also applicable to a disc brake.

Still further, the brake rotational body may be integrated with a drive sheave.

**Claims**

1. Electromagnetic brake device (8) comprising
   a brake shoe (9) for being moved into contact with and away from a brake drum (7),
   an armature (10) connected to the brake shoe (9), a braking spring (11) for pressing the brake shoe (9) against the brake drum (7),
   an electromagnet (11) disposed facing the armature (10) to generate an electromagnetic suction force for opening the brake shoe (9) away from the brake drum (7) against the braking spring (11), the electromagnet (11) being provided with a brake coil (13),
   a release detecting switch (12) for detecting that the armature (10) has been displaced to a full release position, and
   a current detector (15) for detecting a value of a current conducted through the brake coil (13),
   the electromagnetic brake device further comprising an electromagnetic brake control device equipped with a control device body (14) for exciting the brake coil (13) to cause the brake coil (13) to suck the armature (10) with a view to releasing an electromagnetic brake device,
   wherein the control device body (14), which is configured to detect start of a release operation of the armature (10) resulting from suction by the brake coil (13), is configured to reduce a suction force generated in the brake coil (13) to a value smaller than a suction force before the start of the release operation when the start of the release operation is detected, **characterized in that**
   the control device body (14) has a current command generating portion (16) configured to generate a current command for causing a current to flow through the brake coil (13) in accordance with a brake release command;
   a current control portion (17) configured to generate a voltage command as a command regarding a value of a voltage applied to the brake coil (13) such that an actual current value of the brake coil (13) coincides with a value of the current command;
   a release operation detecting portion (20) configured to detect the release operation of the armature (10) based on a change in a value of the voltage command; and
   a current command adjusting portion (21) configured to change the value of the current command based on information from the release operation detecting portion (20),
   wherein:

   the control device body (14) further has a differentiation portion (19) configured to differentiate the value of the voltage command to transmit the differentiated value to the release operation detecting portion (20); and the release operation detecting portion (20) is configured to compare an output from the differentiation portion (19) with a preset threshold to detect the start of the release operation.

2. An electromagnetic brake device (8) according to Claim 1, wherein:

the control device body (14) has a voltage command generating portion (31) configured to generate a voltage command for applying a voltage to the brake coil (13) in accordance with a brake release command; a release operation detecting portion (33) configured todetect the release operation of the armature (10) based on a change in an actual current value of the brake coil (13); and a voltage command adjusting portion (34) configured to change a value of the voltage command based on information from the release operation detecting portion (33) .

3. An electromagnetic brake device (8) according to Claim 2, wherein:

the control device body (14) further has a differentiation portion (32) configured to differentiate the actual current value of the brake coil (13) to transmit the differentiated value to the release operation detecting portion (33); and the release operation detecting portion (33) is configured to compare an output from the differentiation portion (32) with a preset threshold to detect the start of the release operation.

4. An electromagnetic brake device (8) according to Claim 1, wherein the control device body (14) is configured to cause the brake coil (13) to generate the not-yet-reduced suction force when a preset time elapses from start of excitation of the brake coil (13).

5. An electromagnetic brake device (8) according to Claim 1, wherein the control device body (14) is configured to cause the brake coil (13) to generate the not-yet-reduced suction force when a preset time elapses from the start of the release operation of the armature (10).

6. An electromagnetic brake device (8) according to Claim 1, wherein the control device body (14) is configured to adjust the suction force generated in the brake coil (13) after the start of the release operation of the armature (10) in accordance with an operation start time as a time from start of excitation of the brake coil (13) to the start of the release operation.

7. An electromagnetic brake device (8) according to Claim 6, wherein the control device body (14) is configured to measure a time to attainment of a preset value by a current value of the brake coil (13) before the start of the release operation of the armature (10), and corrects the operation start time in accordance with a result of the measurement.

8. Electromagnetic brake device (8) comprising a brake shoe (9) for being moved into contact with and away from a brake drum (7), an armature (10) connected to the brake shoe (9), a braking spring (11) for pressing the brake shoe (9) against the brake drum (7), an electromagnet (11) disposed facing the armature (10) to generate an electromagnetic suction force for opening the brake shoe (9) away from the brake drum (7) against the braking spring (11), the electromagnet (11) being provided with a brake coil (13), a release detecting switch (12) for detecting that the armature (10) has been displaced to a full release position, and a current detector (15) for detecting a value of a current conducted through the brake coil (13), the electromagnetic brake device further comprising an electromagnetic brake control device equipped with a control device body (14) for exciting a brake coil (13) to cause the brake coil (13) to suck an armature (10) with a view to releasing an electromagnetic brake device, wherein the control device body (14), which is configured to detect start of a release operation of the armature (10) resulting from suction by the brake coil (13), is configured to reduce a suction force generated in the brake coil (13) to a value smaller than a suction force before the start of the release operation when the start of the release operation is detected,
**characterized in that**
the control device body (14) has a voltage command generating portion (31) configured to generate a voltage command for applying a voltage to the brake coil (13) in accordance with a brake release command; a release operation detecting portion (33) configured to detect the release operation of the armature (10) based on a change in an actual current value of the brake coil (13); and

a voltage command adjusting portion (34) configured to change a value of the voltage command based on information from the release operation detecting portion (33),
wherein the control device body (14) further has a differentiation portion (32) configured to differentiate the actual current value of the brake coil (13) to transmit the differentiated value to the release operation detecting portion (33); and
the release operation detecting portion (33) is configured to compare an output from the differentiation portion (32) with a preset threshold to detect the start of the release operation.

**Patentansprüche**

1. Elektromagnetische Bremsvorrichtung (8) umfassend
einen Bremsschuh (9), der mit einer Bremstrommel (7) in Kontakt gebracht und von dieser weg bewegt werden kann,
einen Anker (10), der mit dem Bremsschuh (9) verbunden ist, eine Bremsfeder (11) zum Andrücken des Bremsschuhs (9) gegen die Bremstrommel (7),
einen Elektromagneten (11), der angeordnet ist, um dem Anker (10) zugewandt zu sein, um eine elektrostatische Anziehungskraft zum Öffnen des Bremsschuhs (9) weg von der Bremstrommel (7) gegen die Bremsfeder (11) zu erzeugen, wobei der Elektromagnet (11) mit einer Bremsspule (13) versehen ist,
einen Löseerfassungsschalter (12) zum Erfassen, dass der Anker (10) in eine vollständige Löseposition verschoben wurde, und
einen Stromdetektor (15) zum Erfassen eines Wertes eines durch die Bremsspule (13) geleiteten Stroms,
wobei die elektromagnetische Bremsvorrichtung ferner eine elektromagnetische Bremssteuervorrichtung umfasst, die mit einem Steuervorrichtungskörper (14) zum Erregen der Bremsspule (13) ausgestattet ist, um zu bewirken, dass die Bremsspule (13) den Anker (10) zum Lösen der elektromagnetischen Bremsvorrichtung anzieht,
wobei der Steuervorrichtungskörper (14), der konfiguriert ist, um den Beginn eines Lösevorgangs des Ankers (10) zu erfassen, der aus dem Anziehen durch die Bremsspule (13) resultiert, konfiguriert ist, um eine in der Bremsspule (13) erzeugte Anziehungskraft auf einen Wert kleiner als eine Anziehungskraft vor Beginn des Lösevorgangs zu reduzieren, wenn der Beginn des Lösevorgangs erkannt wird, **dadurch gekennzeichnet, dass**
der Steuervorrichtungskörper (14) einen Strombefehl-Erzeugungsabschnitt (16) aufweist, der konfiguriert ist, um einen Strombefehl zum Bewirken eines Stromflusses durch die Bremsspule (13) in Übereinstimmung mit einem Bremslösebefehl zu erzeugen;
einen Stromsteuerabschnitt (17), der konfiguriert ist, um einen Spannungsbefehl als einen Befehl in Bezug auf einen Wert einer Spannung, die an die Bremsspule (13) angelegt wird, so zu erzeugen, dass ein Strom-Istwert der Bremsspule (13) mit einem Wert des Strombefehls zusammenfällt;
einen Lösebetriebserfassungsabschnitt (20), der konfiguriert ist, um den Lösebetrieb des Ankers (10) basierend auf einer Änderung eines Werts des Spannungsbefehls zu erfassen; und
einen Strombefehl-Anpassungsabschnitt (21), der konfiguriert ist, um den Wert des Strombefehls basierend auf Informationen von dem Lösebetriebserfassungsabschnitt (20) zu ändern,
wobei:

der Steuervorrichtungskörper (14) ferner einen Differenzierungsabschnitt (19) aufweist, der konfiguriert ist, um den Wert des Spannungsbefehls zu differenzieren, um den differenzierten Wert an den Lösebetriebserfassungsabschnitt (20) zu übertragen; und
der Lösebetriebserfassungsabschnitt (20) konfiguriert ist, um eine Ausgabe von dem Differenzierungsabschnitt (19) mit einem voreingestellten Grenzwert zu vergleichen, um den Start des Lösebetriebs zu erfassen.

2. Elektromagnetische Bremsvorrichtung (8) nach Anspruch 1, wobei:

der Steuervorrichtungskörper (14) einen Spannungsbefehl-Erzeugungsabschnitt (31) aufweist, der konfiguriert ist, um einen Spannungsbefehl zum Anlegen einer Spannung an die Bremsspule (13) in Übereinstimmung mit einem Bremslösebefehl zu erzeugen;
einen Lösebetriebserfassungsabschnitt (33), der konfiguriert ist, um den Lösebetrieb des Ankers (10) basierend auf einer Änderung eines Ist-Stromwerts der Bremsspule (13) zu erfassen; und
einen Spannungsbefehl-Anpassungsabschnitt (34), der konfiguriert ist, um einen Wert des Spannungsbefehls basierend auf Informationen von dem Lösebetriebserfassungsabschnitt (33) zu ändern.

3. Elektromagnetische Bremsvorrichtung (8) nach Anspruch 2, wobei:

der Steuervorrichtungskörper (14) ferner einen Differenzierungsabschnitt (32) aufweist, der konfigurierte ist, um den Strom-Istwert der Bremsspule (13) zu differenzieren, um den differenzierten Wert an den Lösebetriebserfassungsabschnitt (33) zu übertragen; und

der Lösebetriebserfassungsabschnitt (33) konfiguriert ist, um eine Ausgabe von dem Differenzierungsabschnitt (32) mit einem voreingestellten Grenzwert zu vergleichen, um den Start des Lösebetriebs zu erfassen.

4. Elektromagnetische Bremsvorrichtung (8) nach Anspruch 1, wobei der Steuervorrichtungskörper (14) konfiguriert ist, um die Bremsspule (13) zu veranlassen, die noch nicht reduzierte Anziehungskraft zu erzeugen, wenn eine voreingestellte Zeit ab dem Beginn der Erregung der Bremsspule (13) verstrichen ist.

5. Elektromagnetische Bremsvorrichtung (8) nach Anspruch 1, wobei der Steuervorrichtungskörper (14) konfiguriert ist, um die Bremsspule (13) zu veranlassen, die noch nicht reduzierte Anziehungskraft zu erzeugen, wenn eine voreingestellte Zeit ab dem Beginn des Lösebetriebs des Ankers (10) verstrichen ist.

6. Elektromagnetische Bremsvorrichtung (8) nach Anspruch 1, wobei der Steuervorrichtungskörper (14) konfiguriert ist, um die in der Bremsspule (13) nach dem Beginn des Lösebetriebs des Ankers (10) erzeugte Anziehungskraft in Übereinstimmung mit einer Betriebsstartzeit, als eine Zeit vom Beginn der Erregung der Bremsspule (13) bis zum Beginn des Lösebetriebs, anzupassen.

7. Elektromagnetische Bremsvorrichtung (8) nach Anspruch 6, wobei der Steuervorrichtungskörper (14) konfiguriert ist, um eine Zeit zum Erreichen eines voreingestellten Wertes durch einen Stromwert der Bremsspule (13) vor dem Beginn des Lösebetriebs des Ankers (10) zu messen, und die Betriebsstartzeit gemäß einem Ergebnis der Messung zu korrigieren.

8. Elektromagnetische Bremsvorrichtung (8) umfassend
einen Bremsschuh (9), der mit einer Bremstrommel (7) in Kontakt gebracht und von dieser weg bewegt werden kann, einen Anker (10), der mit dem Bremsschuh (9) verbunden ist, eine Bremsfeder (11) zum Andrücken des Bremsschuhs (9) gegen die Bremstrommel (7),
einen Elektromagneten (11), der angeordnet ist, um dem Anker (10) zugewandt zu sein, um eine elektrostatische Anziehungskraft zum Öffnen des Bremsschuhs (9) weg von der Bremstrommel (7) gegen die Bremsfeder (11) zu erzeugen, wobei der Elektromagnet (11) mit einer Bremsspule (13) versehen ist,
einen Löseerfassungsschalter (12) zum Erfassen, dass der Anker (10) in eine vollständige Löseposition verschoben wurde, und
einen Stromdetektor (15) zum Erfassen eines Wertes eines durch die Bremsspule (13) geleiteten Stroms,
wobei die elektromagnetische Bremsvorrichtung ferner eine elektromagnetische Bremssteuervorrichtung umfasst, die mit einem Steuervorrichtungskörper (14) zum Erregen der Bremsspule (13) ausgestattet ist, um zu bewirken, dass die Bremsspule (13) den Anker (10) zum Lösen der elektromagnetischen Bremsvorrichtung anzieht,
wobei der Steuervorrichtungskörper (14), der konfiguriert ist, um den Beginn eines Lösevorgangs des Ankers (10) zu erfassen, der aus dem Anziehen durch die Bremsspule (13) resultiert, konfiguriert ist, um eine in der Bremsspule (13) erzeugte Anziehungskraft auf einen Wert kleiner als eine Anziehungskraft vor Beginn des Lösevorgangs zu reduzieren, wenn der Beginn des Lösevorgangs erkannt wird, **dadurch gekennzeichnet, dass**
der Steuervorrichtungskörper (14) einen Spannungsbefehl-Erzeugungsabschnitt (31) aufweist, der konfiguriert ist, um einen Spannungsbefehl zum Anlegen einer Spannung an die Bremsspule (13) in Übereinstimmung mit einem Bremslösebefehl zu erzeugen;
einen Lösebetriebserfassungsabschnitt (33), der konfiguriert ist, um den Lösebetrieb des Ankers (10) basierend auf einer Änderung eines Ist-Stromwerts der Bremsspule (13) zu erfassen; und
einen Spannungsbefehl-Anpassungsabschnitt (34), der konfiguriert ist, einen Wert des Spannungsbefehls basierend auf Informationen von dem Lösebetriebserfassungsabschnitt (33) zu ändern,
wobei der Steuervorrichtungskörper (14) ferner einen Differenzierungsabschnitt (32) aufweist, der konfiguriert ist, den Ist-Stromwert der Bremsspule (13) zu differenzieren, um den differenzierten Wert an den Lösebetriebserfassungsabschnitt (33) zu übertragen; und
der Lösebetriebserfassungsabschnitt (33) konfiguriert ist, um eine Ausgabe von dem Differenzierungsabschnitt (32) mit einem voreingestellten Grenzwert zu vergleichen, um den Start des Lösebetriebs zu erfassen.

**Revendications**

1. Dispositif de frein électromagnétique (8) comprenant :

une mâchoire de frein (9) destinée à être déplacée en contact avec et loin d'un tambour de frein (7),
une armature (10) raccordée à la mâchoire de frein (9), un ressort de freinage (11) pour le pressage de la mâchoire de frein (9) contre le tambour de frein (7),
un électroaimant (11) disposé en étant tourné vers l'armature (10) pour générer une force d'aspiration électromagnétique pour l'ouverture de la mâchoire de frein (9) loin du tambour de frein (7) contre le ressort de freinage (11), l'électroaimant (11) étant doté d'une bobine de frein (13),
un commutateur de détection de libération (12) pour la détection du fait que l'armature (10) a été déplacée dans une position de libération complète, et
un détecteur de courant (15) pour la détection d'une valeur d'un courant conduit au travers de la bobine de frein (13),
le dispositif de frein électromagnétique comprenant en outre un dispositif de commande de frein électromagnétique équipé d'un corps de dispositif de commande (14) pour l'excitation de la bobine de frein (13) pour amener la bobine de frein (13) à aspirer l'armature (10) en vue de libérer un dispositif de frein électromagnétique,
dans lequel le corps de dispositif de commande (14) qui est configuré pour détecter le démarrage d'une opération de libération de l'armature (10) résultant de l'aspiration par la bobine de frein (13), est configuré pour réduire une force d'aspiration générée dans la bobine de frein (13) à une valeur inférieure à une force d'aspiration avant le démarrage de l'opération de libération lorsque le démarrage de l'opération de libération est détecté, **caractérisé en ce que**
le corps de dispositif de commande (14) présente une portion de génération de commande de courant (16) configurée pour générer une commande de courant pour amener un courant à circuler au travers de la bobine de frein (13) selon une commande de libération de frein ;
une portion de commande de courant (17) configurée pour générer une commande de tension comme une commande concernant une valeur d'une tension appliquée à la bobine de frein (13) de sorte qu'une valeur de courant réel de la bobine de frein (13) coïncide avec une valeur de la commande de courant ;
une portion de détection d'opération de libération (20) configurée pour détecter l'opération de libération de l'armature (10) sur la base d'un changement d'une valeur de la commande de tension ; et
une portion d'ajustement de commande de courant (21) configurée pour changer la valeur de la commande de courant sur la base d'informations de la portion de détection d'opération de libération (20),
dans lequel :

le corps de dispositif de commande (14) présente en outre une portion de différentiation (19) configurée pour différentier la valeur de la commande de tension pour transmettre la valeur différentiée à la portion de détection d'opération de libération (20) ; et
la portion de détection d'opération de libération (20) est configurée pour comparer une sortie de la portion de différentiation (19) avec un seuil prédéfini pour détecter le démarrage de l'opération de libération.

2. Dispositif de frein électromagnétique (8) selon la revendication 1, dans lequel :

le corps de dispositif de commande (14) présente une portion de génération de commande de tension (31) configurée pour générer une commande de tension pour l'application d'une tension à la bobine de frein (13) selon une commande de libération de frein ;
une portion de détection d'opération de libération (33) configurée pour détecter l'opération de libération de l'armature (10) sur la base d'un changement d'une valeur de courant réel de la bobine de frein (13) ; et
une portion d'ajustement de commande de tension (34) configurée pour changer une valeur de la commande de tension sur la base d'informations de la portion de détection d'opération de libération (33).

3. Dispositif de frein électromagnétique (8) selon la revendication 2, dans lequel :

le corps de dispositif de commande (14) présente en outre une portion de différentiation (32) configurée pour différentier la valeur de courant réel de la bobine de frein (13) pour transmettre la valeur différentiée à la portion de détection d'opération de libération (33) ; et
la portion de détection d'opération de libération (33) est configurée pour comparer une sortie de la portion de différentiation (32) avec un seuil prédéfini pour détecter le démarrage de l'opération de libération.

4. Dispositif de frein électromagnétique (8) selon la revendication 1, dans lequel le corps de dispositif de commande (14) est configuré pour amener la bobine de frein (13) à générer la force d'aspiration pas encore réduite lorsqu'un temps prédéfini s'écoule depuis le démarrage de l'excitation de la bobine de frein (13).

5. Dispositif de frein électromagnétique (8) selon la revendication 1, dans lequel le corps de dispositif de commande (14) est configuré pour amener la bobine de frein (13) à générer la force d'aspiration pas encore réduite lorsqu'un temps prédéfini s'écoule depuis le démarrage de l'opération de libération de l'armature (10).

6. Dispositif de frein électromagnétique (8) selon la revendication 1, dans lequel le corps de dispositif de commande (14) est configuré pour ajuster la force d'aspiration générée dans la bobine de frein (13) après le démarrage de l'opération de libération de l'armature (10) selon un temps de démarrage d'opération comme un temps depuis le démarrage de l'excitation de la bobine de frein (13) au démarrage de l'opération de libération.

7. Dispositif de frein électromagnétique (8) selon la revendication 6, dans lequel le corps de dispositif de commande (14) est configuré pour mesurer un temps jusqu'à l'atteinte d'une valeur prédéfinie par une valeur de courant de la bobine de frein (13) avant le démarrage de l'opération de libération de l'armature (10), et corrige le temps de démarrage d'opération selon un résultat de la mesure.

8. Dispositif de frein électromagnétique (8) comprenant
   une mâchoire de frein (9) destiné à être déplacée en contact avec et loin d'un tambour de frein (7),
   une armature (10) raccordée à la mâchoire de frein (9), un ressort de freinage (11) pour le pressage de la mâchoire de frein (9) contre le tambour de frein (7),
   un électroaimant (11) disposé en étant tourné vers l'armature (10) pour générer une force d'aspiration électromagnétique pour l'ouverture de la mâchoire de frein (9) loin du tambour de frein (7) contre le ressort de freinage (11), l'électroaimant (11) étant doté d'une bobine de frein (13),
   un commutateur de détection de libération (12) pour la détection du fait que l'armature (10) a été déplacée jusque dans une position de libération complète, et
   un détecteur de courant (15) pour la détection d'une valeur d'un courant conduit au travers de la bobine de frein (13), le dispositif de frein électromagnétique comprenant en outre un dispositif de commande de frein électromagnétique équipé avec un corps de dispositif de commande (14) pour l'excitation d'une bobine de frein (13) pour amener la bobine de frein (13) à aspirer une armature (10) en vue de libérer un dispositif de frein électromagnétique,
   dans lequel le corps de dispositif de commande (14) qui est configuré pour détecter le démarrage d'une opération de libération de l'armature (10) résultant de l'aspiration par la bobine de frein (13), est configuré pour réduire une force d'aspiration générée dans la bobine de frein (13) à une valeur inférieure à une force d'aspiration avant le démarrage de l'opération de libération lorsque le démarrage de l'opération de libération est détecté,
   **caractérisé en ce que**
   le corps de dispositif de commande (14) présente une portion de génération de commande de tension (31) configurée pour générer une commande de tension pour l'application d'une tension à la bobine de frein (13) selon une commande de libération de frein ;
   une portion de détection d'opération de libération (33) configurée pour détecter l'opération de libération de l'armature (10) sur la base d'un changement d'une valeur de courant réel de la bobine de frein (13) ; et
   une portion d'ajustement de commande de tension (34) configurée pour changer une valeur de la commande de tension sur la base d'informations de la portion de détection d'opération de libération (33),
   dans lequel le corps de dispositif de commande (14) présente en outre une portion de différentiation (32) configurée pour différentier la valeur de courant réel de la bobine de frein (13) pour transmettre la valeur différentiée à la portion de détection d'opération de libération (33) ; et
   la portion de détection d'opération de libération (33) est configurée pour comparer une sortie de la portion de différentiation (32) avec un seuil prédéfini pour détecter le démarrage de l'opération de libération.

# FIG. 1

# FIG. 2

CONTROL DEVICE BODY — 14

BRAKE RELEASE COMMAND → CURRENT COMMAND GENERATING PORTION (16) → CURRENT COMMAND ADJUSTING PORTION → CURRENT COMMAND → CURRENT CONTROL PORTION (17) → VOLTAGE COMMAND → LIMITER (18) → BRAKE COIL (13) → CURRENT DETECTOR (15)

TIMER — 23

COIL ACTUAL CURRENT

21

CONTROL COMMAND VALUE

22 — CONTROL TIME DETECTING PORTION

RELEASE OPERATION DETECTING PORTION (20) ← du/dt ← DIFFERENTIATION PORTION (19)

EP 1 995 202 B1

# FIG. 3

START

$I* = I*_p$ — S1

$T = 0$ — S2

$u = [\{(K_i + K_d)/K_d\} I* - I] K_d$
$u < u'$ — S3

$T = T + \delta T$

T > T₁ — S4 ... No / Yes

$a = du/dt$ — S5

a > a' — S6 ... No / Yes

$Tc = 0$ — S7

$I* = I*_c$ — S8

$u = [\{(K_i + K_d)/K_d\} I* - I] K_d$
$u < u'$ — S9

$T = T + \delta T$
$Tc = Tc + \delta Tc$

T > T_end — S10 ... Yes / No

Tc > Tc_end — S11 ... No / Yes

$I* = I*_p$ — S12

BK-switch ON? — S13 ... No / Yes

$I* = I*_h$ — S14

END

# FIG. 4

I'p: INITIAL CURRENT COMMAND VALUE

CONVENTIONAL ART

I*: CURRENT COMMAND

THE PRESENT INVENTION

I*h: HOLDING CURRENT COMMAND VALUE

I*c: CONTROL CURRENT VALUE

T=0    Ip    CONVENTIONAL ART    T: TIME

I: COIL CURRENT

THE PRESENT INVENTION

Ic

Ih

T=0    Tp    Tend    T: TIME

Tcend

# FIG. 5

X: DISPLACEMENT OF ARMATURE

THE PRESENT INVENTION

CONVENTIONAL ART

T=0    T: TIME

u: VOLTAGE COMMAND VALUE

trig-on (du/dt>a')

CONVENTIONAL ART

THE PRESENT INVENTION

T=0    Tp    Tend    T: TIME

Tc=0    Tcend

18

# FIG. 6

CONTROL DEVICE BODY — 14

BRAKE RELEASE COMMAND → CURRENT COMMAND GENERATING PORTION (16) → CURRENT COMMAND ADJUSTING PORTION → CURRENT COMMAND → CURRENT CONTROL PORTION (17) → VOLTAGE COMMAND → LIMITER (18) → BRAKE COIL (13) → CURRENT DETECTOR (15)

TIMER — 23

COIL ACTUAL CURRENT

DIFFERENTIATION PORTION (19)

RELEASE OPERATION DETECTING PORTION (20) — du/dt

CONTROL TIME DETECTING PORTION (22)

OPERATION START TIME DETECTING PORTION — 24

GAP/PRESSING FORCE COMPENSATION PORTION (25)

CONTROL COMMAND REFERENCE VALUE

21

EP 1 995 202 B1

19

# FIG. 7

START

$I^* = I^*p$ — S1

$T = 0$ — S2

$u = [\{(K_i + K_d)/K_d\}\,I^* - I]\,K_d$
$u < u'$ — S3

$T = T + \delta T$

$T > T_1$ — S4
No

Yes

$a = du/dt$ — S5

$a > a'$ — S6
No

Yes

$Tp = Tp', Tc = 0$ — S15

$I^*c = Tp' \cdot Ka + Icr$
$I^*cmin < I^*c < I^*cmax$ — S16

$I^* = I^*c$ — S8

$u = [\{(K_i + K_d)/K_d\}\,I^* - I]\,K_d$
$u < u'$ — S9

$T = T + \delta T$
$Tc = Tc + \delta Tc$

$T > T_{end}$ — S10
No      Yes

$Tc > Tc_{end}$ — S11
No

Yes — S12

$I^* = I^*p$ — S12

BK-switch
ON? — S13
No

Yes

$I^* = I^*h$ — S14

END

# FIG. 8

I * c: CONTROL COMMAND VALUE

Ic$_{max}$: MAXIMUM VALUE OF
CONTROL CURRENT

I * c$_=$Tp'・Ka+Icr

Ic$_{min}$: MINIMUM VALUE OF CONTROL CURRENT

Tp: OPERATION START TIME

21

# FIG. 9

CONTROL DEVICE BODY — 14

BRAKE RELEASE COMMAND → CURRENT COMMAND GENERATING PORTION (16) → CURRENT COMMAND ADJUSTING PORTION (21) → CURRENT COMMAND → CURRENT CONTROL PORTION (17) → VOLTAGE COMMAND → LIMITER (18) → BRAKE COIL (13) → CURRENT DETECTOR (15)

TIMER (23)

COIL ACTUAL CURRENT

DIFFERENTIATION PORTION (19) — du/dt

RELEASE OPERATION DETECTING PORTION (20)

CONTROL TIME DETECTING PORTION (22)

OPERATION START TIME DETECTING PORTION (24)

GAP/PRESSING FORCE COMPENSATION PORTION (25)

COIL RESISTANCE COMPENSATION PORTION

TIME CONSTANT DETECTING PORTION (26)

27

CONTROL COMMAND REFERENCE VALUE

EP 1 995 202 B1

# FIG. 10

START

$I* = I*p$ — S1

$T = 0$ — S2

$u = [\{(K_i + K_d)/K_d\} I* - I] K_d$
$u < u'$ — S3

$T = T + \delta T$

$T > T_1$ — S4 — No

Yes

$a = du/dt$ — S5

$I > I_1$ — S17 — No

Yes

$Tr = Tr'$ — S18

$a > a'$ — S6 — No

Yes

$Tp = Tp', Tc = 0$ — S15

$Tp'' = Tp' - Kr\dfrac{Tr'}{Trr}$ — S19

$I*c = Tp'' \cdot Ka + Icr$
$I*c_{min} < I*c < I*c_{max}$ — S20

$I* = I*c$ — S8

$u = [\{(K_i + K_d)/K_d\} I* - I] K_d$
$u < u'$ — S9

$T = T + \delta T$
$Tc = Tc + \delta Tc$

$T > T_{end}$ — S10 — Yes

No

$Tc > Tc_{end}$ — S11 — No

Yes — S12

$I* = I*p$

BK-switch ON? — S13 — No

Yes

$I* = I*h$

END — S14

# FIG. 11

CONTROL DEVICE BODY — 14

BRAKE RELEASE COMMAND →

TIMER — 23

VOLTAGE COMMAND GENERATING PORTION — 31

VOLTAGE COMMAND ADJUSTING PORTION — 34

VOLTAGE COMMAND

LIMITER — 18

BRAKE COIL — 13

CURRENT DETECTOR — 15

RELEASE OPERATION DETECTING PORTION — 33

di/dt

DIFFERENTIATION PORTION — 32

COIL ACTUAL CURRENT

CONTROL TIME DETECTING PORTION — 22

CONTROL COMMAND VALUE

EP 1 995 202 B1

# FIG. 12

START

$u^* = u^*p$ — S31

$T = 0$ — S32

$u < u'$ — S33

$T = T + \delta T$

No ← $T > T_1$ — S34

Yes

$a = di/dt$ — S35

No ← $a < a'$ — S36

Yes

$Tc = 0$ — S37

$u^* = u^*c$ — S38

$T = T + \delta T$
$Tc = Tc + \delta Tc$

$T > T_{end}$ — S39 → Yes

No

No ← $Tc > Tc_{end}$ — S40

Yes — S41

$u^* = u^*p$

No ← BK-switch ON? — S42

Yes

$u^* = u^*h$ — S43

END

# FIG. 13

BRAKE
RELEASE
COMMAND → COMMAND GENERATING PORTION (41) → COMMAND ADJUSTING PORTION (42) → EXCITATION COMMAND VALUE → BRAKE COIL (13)

TIMER (23)

CONTROL COMMAND VALUE

14

EP 1 995 202 B1

# FIG. 14

```
                    ┌──────────────┐
                    │    START     │
                    └──────┬───────┘
                           ▼
                    ┌──────────────┐
                    │     T=0      │────S51
                    └──────┬───────┘
                           ▼
                    ┌──────────────┐
                    │  I * =I * p  │────S52
        ┌──────────▶│     or       │
        │           │  u * =u * p  │
        │           └──────┬───────┘
  ┌──────────────┐         ▼
  │ T=T+ δ T     │      ╱────────╲
  └──────────────┘     ╱   S53    ╲
        ▲         No  ╱            ╲
        └────────────◀   T > T₁     │
                      ╲            ╱
                       ╲          ╱
                        ╲────────╱
                           │ Yes
                           ▼
                    ┌──────────────┐
                    │  I * =I * c  │────S54
        ┌──────────▶│     or       │
        │           │  u * =u * c  │
        │           └──────┬───────┘
  ┌──────────────┐         ▼
  │ T=T+ δ T     │      ╱────────╲
  └──────────────┘     ╱   S55    ╲
        ▲         No  ╱            ╲
        └────────────◀  T > T end   │
                      ╲            ╱
                       ╲          ╱
                        ╲────────╱
                           │ Yes
                           ▼
                    ┌──────────────┐
                    │  I * =I * p  │────S56
                    │     or       │
                    │  u * =u * p  │
                    └──────┬───────┘
                           ▼
                    ┌──────────────┐
                    │     END      │
                    └──────────────┘
```

**EP 1 995 202 B1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 9267982 A
- JP 3307002 B
- DE 3942836 A1